(19) **Europäisches Patentamt / European Patent Office / Office européen des brevets**

(11) **EP 2 527 477 A1**

(12) **EUROPEAN PATENT APPLICATION**
published in accordance with Art. 153(4) EPC

(43) Date of publication:
**28.11.2012 Bulletin 2012/48**

(21) Application number: **11734708.8**

(22) Date of filing: **20.01.2011**

(51) Int Cl.:
*C22B 11/02* (2006.01)      *C22B 7/00* (2006.01)
*C22B 9/02* (2006.01)      *C22B 59/00* (2006.01)
*C22B 15/00* (2006.01)

(86) International application number:
**PCT/JP2011/050940**

(87) International publication number:
**WO 2011/090102 (28.07.2011 Gazette 2011/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2010 JP 2010011022**

(71) Applicant: **Sumitomo Metal Industries, Ltd.**
**Osaka 541-0041 (JP)**

(72) Inventors:
• **NAKAMOTO Masashi**
**Suita-shi**
**Osaka 565-0871 (JP)**

• **YAMAMOTO Takaiku**
**Osaka-shi**
**Osaka 541-0041 (JP)**

(74) Representative: **Jackson, Martin Peter**
**J A Kemp**
**14 South Square**
**Gray's Inn**
**London WC1R 5JJ (GB)**

(54) **EFFICIENT METHOD FOR COLLECTION OF PLATINUM-GROUP ELEMENT FROM COPPER-IRON SCRAP**

(57) The present invention provides a means for efficiently recovering a platinum group element by efficiently concentrating it in a molten copper phase obtained from copper-iron scrap containing a platinum group element. It is a method comprising melting copper-iron scrap containing a platinum group element, forming the melt into two liquid phases, a molten copper phase containing at least one rare metal selected from the group consisting of Nd, Pr, and Dy and a molten iron phase having a carbon concentration of at least 1 mass %, with the carbon contained in the molten iron phase being derived from carbon contained in the melt, separating the two liquid phases and recovering the molten copper phase, and separating and recovering from the molten copper phase a platinum group element dissolved therein. The copper-iron scrap may contain a rare metal, or a member containing a rare metal may be added to the melt. The total concentration of rare metals contained in the melt is preferably at least 1 mass %.

Fig. 1

EP 2 527 477 A1

**Description**

Technical Field

This invention relates to a method in which scrap containing copper and iron (referred to in this description as copper-iron scrap) and further containing a platinum group element typified by platinum (Pt) is separated into a molten copper phase containing neodymium (Nd), dysprosium (Dy), and/or praseodymium (Pr) (these metals will be collectively referred to below as rare metals) and a molten iron phase containing carbon in a predetermined concentration and the platinum is separated and recovered by concentrating the platinum contained in the copper-iron scrap in the molten copper phase with a high distribution ratio.

Background Art

Various types of products including metal products made of iron and steel, copper, copper alloys and the like such as industrial equipment, transport equipment such as automobiles, household electrical appliances, office automation equipment, and electrical equipment, plastic products, and other types of products are manufactured in large quantities. These products typically comprise electrical parts mounted on a frame or cabinet. Structural members such as frames often use ferrous materials, and electrical components often use materials containing copper (copper and copper alloys) as wiring. Electrical components use a wide variety of valuable metals in order to exhibit desired device properties. In recent years, there has been a tendency to use an increasing variety and increasing amounts of these metals in order to increase the performance of products.

When these products are discarded, since they contain copper and iron, they become copper-iron scrap. There is much prior art concerning recovery of copper and iron from this copper-iron scrap by separating copper and iron into two liquid phases, i.e., a copper phase and an iron phase by a melting process. In a method known to be superior, copper and iron can be efficiently separated and recovered by adding carbon or the like in the melting process. In addition to such a method, it is also known that the alloying elements and precious metals contained in copper-iron scrap are dissolved in a molten copper phase or a molten iron phase and separated and recovered.

For example, Patent Document 1 discloses a method of recovering metals from copper-iron scrap in which carbon is dissolved in a melt obtained by melting copper-iron scrap in a furnace to form the melt into two liquid phases, a molten copper phase and a molten iron phase, and separating the two phases to recover copper and iron separately, wherein the furnace used for melting the copper-iron scrap is a melting furnace having a packed bed of a carbonaceous material, and a carbonaceous material with an average particle diameter of 20 - 70 mm is used to form the packed bed of the melting furnace. It also discloses that valuable metals are separated in an individual phase and recovered. However, there is a desire for a method capable of efficiently recovering specific types of metals.

Typical examples of metals for which an efficient recovery method is desired are platinum group elements. Among platinum group elements, platinum (Pt) which is the most industrially useful is employed as a catalyst for automotive exhaust gas processing, for example. However, there is a limited number of countries which produce platinum. Therefore, platinum is a typical precious metal which it is desired to recover from existing used products.

As a method of recovering platinum from copper-iron scrap containing platinum, Non-Patent Document 1 discloses a method in which carbon is dissolved in an iron phase and a molten copper phase and a molten iron phase are separated in an iron (Fe)-copper (Cu)-carbon (C) system. Due to the difference in specific gravity, the molten copper phase and the molten iron phase are separated as a lower phase and an upper phase, respectively, and recovered separately. The distribution of platinum in these two phases is determined by the interaction between platinum and iron and between platinum and copper. It is reported that the distribution ratio of platinum [mass % Pt]$_{in\ Cu}$/[mass % Pt]$_{inFe-C}$ (the mass % of platinum in copper / the mass % of platinum in carbon-containing iron) is around 1, so platinum is distributed roughly equally in the two phases.

Patent Document 2 discloses that in a method of separating two liquid phases of a copper and iron phases in an iron (Fe)-copper (Cu)-carbon (C)-phosphorus (P) system, platinum is concentrated in the iron phase.

In addition to the above-described platinum group elements, a useful metal for which an improved recovery method is desired is neodymium (Nd). The production of Nd magnets, which is the principal use of neodymium, is said to be around 10,000 tons per year. For example, a single hybrid automobile uses one kg of Nd magnets, and the amount of copper-iron members including Nd magnets in the automobile (in the motor, alternator, sensors, and the like: iron: copper = 80:20) is approximately 50 kg. One kilogram of Nd magnets contains a total of around 300 - 400 grams of rare metals such as neodymium (Nd), dysprosium (Dy), and praseodymium (Pr). As Nd magnets are not reused as magnets, there is a desire for an effective processing method after recovery of products.

Prior Art Documents

Patent Documents

Patent Document 1: JP 2009-185369 A
Patent Document 2: JP 2004-083962 A

Non-Patent Documents

Non-Patent Document 1: Yamaguchi et al, Shigen to Zairyo (Resources and Materials), Vol. 113 (1997), page 1110

Disclosure of Invention

In the method disclosed in Non-Patent Document 1 which is a copper and iron two liquid phase separation method in an iron (Fe)-copper (Cu)-carbon (C) system, the distribution of platinum is determined by the interaction between platinum and iron and by the interaction between platinum and copper. Therefore, the distribution ratio [mass % Pt]$_{in\ Cu}$/[mass % Pt]$_{in\ Fe-C}$ is around 1, and plutinum is distributed nearly equally in the two phases. Namely, Non-Patent Document 1 suggests that with an iron (Fe)-copper (Cu)-carbon (C) system, it is difficult to select an efficient process in which platinum is concentrated in one of the phases and is recovered from the concentrated phase.

In contrast, according to the method disclosed in Patent Document 2, it is possible to concentrate platinum in a molten iron phase, i.e., to concentrate it in one of the phases). However, recovering platinum from a molten iron phase is difficult in actual practice. A method of dissolving an iron phase in an acid solution and then collecting platinum by aqueous solution electrolysis is conceivable. In this case, it is necessary to dissolve all of the iron phase in acid in order to recover platinum, which is present in a small amount compared to iron which is the medium. Therefore, a large amount of acid is necessary, and this creates the problem of disposing a large amount of waste acid solution which is formed. Accordingly, for practical purposes, it is necessary to develop a new efficient method of separating and recovering platinum from an iron phase.

In an existing copper refining process, due to the presence of platinum contained in a copper concentrate used as a raw material, a recovery method for platinum in a copper refining process has already been established. The details of a copper refining process are as follows. First, a copper concentrate is separated into slag, matte, and off-gas in a flash smelting furnace. Iron is removed in the slag phase, and sulphur is removed as off-gas. The matte is then oxidized in a converter and separated into slag, crude copper, and off-gas. The crude copper is passed through a refining furnace to an electrolytic tank in which it is separated into electrolytic copper, an anode slime, and an electrolyte. Platinum which was separated from copper is concentrated in the anode slime, and the platinum is recovered by subjecting the slime to electrolysis after being dissolved in an acid. Thus, the copper phase can be processed by placing it into a converter in the current copper refining process, and subsequently according to the conventional copper refining process, platinum contained in the copper phase can be recovered.

From the above, for recovery of platinum from copper-iron scrap, if platinum can be concentrated in a molten copper phase, it becomes possible to recover the platinum by applying an existing copper refining process to the subsequent processing of the molten copper phase.

The object of the present invention is to provide a means for efficiently recovering platinum group elements from copper-iron scrap containing platinum group elements typified by platinum by efficiently concentrating platinum group elements in a molten copper phase which is obtained from the copper-iron scrap.

Upon investigation of the distribution of rare metals in a copper phase and an iron phase and the interaction of platinum group elements and particularly platinum with these rare metals as well as the effect of there elements on separation of copper and iron liquid phases, the present inventors found that rare metals are concentrated in a copper phase and that platinum, which has a thermodynamic affinity for rare metals, is attracted by the rare metals into the copper phase and concentrated in the copper phase with a high distribution ratio.

The present invention, which was completed based on this finding, is as follows.

(1) A method for recovering platinum in copper-iron scrap characterized by melting copper-iron scrap containing a platinum group element, allowing the resulting melt to contain a carbon source so as to form the melt into two liquid phases, one being a molten copper phase containing one or more rare metals selected from the group consisting ofNd, Pr, and Dy and the other being a molten iron phase having a carbon concentration of at least 1 mass %, separating the two liquid phases to recover the molten copper phase, and separating and recovering platinum dissolved in the molten copper phase from the molten copper phase.

(2) A method as set forth above in (1) wherein the molten copper phase is made to contain the rare metals by using scrap containing the rare metal as the copper-iron scrap.

(3) A method as set forth above in (1) wherein the molten copper phase is made to contain the rare metals by adding a member containing the rare metal to the melt.

(4) A method as set forth above in (1) wherein the total concentration of the rare metals contained in the molten copper phase is at least 1 mass %.

(5) A method as set forth in claim 1 wherein the melt contains at least one distribution promoting metal selected from the group consisting of Sc, Li, Ca, Mg, Y, La, K, Sr, Th, Ga, Ba, Na, and Rb, and/or at least one distribution inhibiting metal selected from the group consisting of Ti, Zr, Hf, Nb, V, U, and Ta, and the molten copper phase and the molten iron phase which were obtained by separating the melt into two liquid phases satisfy the following Equation (i).

$$2.2Sc + 1.7Li + 1.4Ca + 1.2Mg + 1.2Y + Nd + Pr + 0.87Dy + 0.79La +$$
$$0.78K + 0.74Sr + 0.61Th + 0.52Ga + 0.51Ba + 0.50Na + 0.45Rb + 0.36Pu +$$
$$0.35Cs + 0.24Sn + 0.23In + 0.23Zn - (1.2Ti + 1.2Zr + 0.51Hf + 0.49Nb + 0.29V +$$

$$0.29U + 0.25Ta) > 1.0 \text{ mass } \% \qquad (i)$$

In Equation (i), the symbol for each element indicates the mass concentration (unit: mass%) of the corresponding element in the molten copper phase with respect to the mass of the molten copper phase in the case of the distribution promoting metals and the rare metals, and it indicates the mass concentration (unit: mass%) of the corresponding element in the molten iron phase with respect to the mass of the molten iron phase in the case of the distribution inhibiting metals.

According to the present invention, it is realized that platinum, which is considered to be difficult to efficiently recover because of its distribution ratio between a copper and an iron liquid phase which is normally around 1, can be concentrated in a copper phase and easily recovered with high efficiency based on conventional technology. The present invention can also concentrate platinum group elements other than platinum in the copper phase. Therefore, the present invention provides a means for efficiently recovering platinum group elements. Furthermore, rare metals are concentrated in the copper phase during the course of concentrating platinum group elements, so Nd and other rare metals can also be efficiently recovered.

Brief Explanation of the Drawings

Figure 1 is a graph showing the effect of element *i* in a copper phase on the distribution ratio of platinum (Pt).
Figure 2 is a graph showing the effect of neodymium (Nd) in a copper phase on the distribution ratio of platinum (Pt).

Modes for Carrying out the Invention

When copper-iron scrap such as household electrical appliances which contains platinum group elements and particularly platinum and which includes neodymium magnets containing rare metals such as neodymium (Nd), dysprosium (Dy), and praseodymium (Pr) is melted in a carbonaceous material-packed bed or the like so as to dissolve carbon in the resulting melt and the melt is separated into two liquid phases, i.e., a copper phase and an iron phase, the rare metals are concentrated in the copper phase. As the rare metals are concentrated in the copper phase, the distribution ratio of platinum between the copper phase and the iron phase varies due to the influence of the rare metals.

The present invention is based on this principle, and makes it possible to obtain a copper phase in which a platinum group element and particularly platinum is concentrated. As a result, the platinum group element can be efficiently separated and recovered from copper-iron scrap. In addition, rare metals are also concentrated in the copper phase, so it is possible to also recover rare metals at the same time.

The present invention will be explained in greater detail.

In the present invention, by causing a melt obtained by melting copper-iron scrap to contain a carbon source, the melt is allowed to separate into two liquid phases in the form of a molten copper phase and a molten iron phase (more precisely, a molten liquid phase having a principal component of iron-carbon). As disclosed in Patent Documents 1 and 2, if the carbon concentration in a molten iron phase is made at least 1 mass percent and preferably at least 4 mass percent, the amount of copper contained in the molten iron phase can be reduced. Accordingly, a decrease in the amount of copper recovered as a molten copper phase is suppressed, which contributes to an increase in the recovery rate of platinum group elements. As described below, increasing the carbon concentration in the molten iron phase increases the distribution of a platinum group element and particularly platinum in the molten copper phase. Therefore, from this standpoint as well, it is preferable to set the carbon concentration in the molten iron phase to a high level.

There is no limitation on a way of supplying a carbon source to the melt. Resins which are incorporated in carbon-iron scrap can be used as a carbon source, or a known carbonaceous material such as coal can be added to the copper-iron scrap or melt as a carbon source. Alternatively, a graphite crucible can be used as a vessel for melting the copper-iron scrap, and carbon can be supplied from the crucible.

In the following explanation, the case will be explained in which recovery is carried out of platinum (Pt) as a typical example of a platinum group element.

The equilibrium reaction between platinum (Pt) in a copper phase and platinum in an iron phase is expressed by Equation (1).

$$Pt\,(in\,Cu) = Pt\,(in\,Fe-C) \qquad (1)$$

Since the chemical potentials are equal in an equilibrium state, Equation (2) is established. As shown by Equation (3) which is based on the relationship in Equation (2), the distribution ratio of platinum between the copper phase and the iron phase $X_{Pt\,in\,Cu}/X_{Pt\,in\,Fe-C}$ is given by the activity coefficients of platinum $\gamma_{Pt\,in\,Cu}$ and $\gamma_{Pt}$ in $_{Fe-C}$ in the respective phases.

$$RT \cdot \ln a_{Pt\,in\,Cu} = RT \cdot \ln a_{Pt\,in\,Fe-C} \qquad (2)$$

$$X_{Pt\,in\,Cu} \Big/ X_{Pt\,in\,Fe-C} = \gamma_{Pt\,in\,Fe-C} \Big/ \gamma_{Pt\,in\,Cu} \qquad (3)$$

where $a_{Pt\,in\,Cu}$ and $a_{Pt\,in\,Fe-C}$ indicate the activity of platinum (Pt) in the copper phase and in the iron phase, respectively, $X_{Pt\,in\,Cu}$ and $X_{Pt\,in\,Fe-C}$ are the molar fractions of platinum (Pt) in the copper phase and in the iron phase, respectively, R is the gas constant, and T is the temperature (K).

The activity coefficient of Pt in each phase can be calculated as shown by Equations (4) and (5).

$$\ln \gamma_{Pt\,in\,Fe-C} = \ln \gamma°_{Pt\,in\,Fe} + \sum \varepsilon_{Pt^{i}\,in\,Fe} \cdot X_{i\,in\,Fe-C} \qquad (4)$$

$$\ln \gamma_{Pt\,in\,Cu} = \ln \gamma°_{Pt\,in\,Cu} + \sum \varepsilon_{Pt^{i}\,in\,Cu} \cdot X_{i\,in\,Cu} \qquad (5)$$

where $\gamma°_{Pt\,in\,Fe}$ and $\gamma°_{Pt\,in\,Cu}$ are the activity coefficients of platinum (Pt) in pure iron and pure copper, respectively, $\varepsilon_{Pt^{i}\,in\,Fe}$ and $\varepsilon_{Pt^{i}\,in\,Cu}$ are respectively the interaction coefficients of platinum (Pt) and element $i$ in an iron (Fe)-platinum (Pt)-element $i$ alloy system and a copper (Cu)-platinum (Pt)-element $i$ alloy system, and $X_{i\,in\,Fe-C}$ and $X_{i\,in\,Cu}$ are respectively the molar fractions of element $i$ in the iron phase and in the copper phase.

$$\ln \gamma_{Pt\,in\,Fe-C} = \ln \gamma°_{Pt\,in\,Fe} +$$
$$\sum \{ \varepsilon_{Pt^{i}\,in\,Fe} / Mi / \sum ([mass\%i]_{in\,Fe-C} / Mi) \cdot [mass\%i]_{in\,Fe-C} \} \qquad (6)$$

$$\ln \gamma_{Pt\,in\,Cu} = \ln \gamma^{\circ}{}_{Pt\,in\,Cu} +$$

$$\sum \{\varepsilon_{Pt^i\,in\,Cu} / Mi / \sum ([mass\%i]_{in\,Cu} / Mi) \cdot [mass\%i]_{in\,Cu} \} \qquad (7)$$

where [mass % i]$_{in\,Fe\text{-}C}$ and [mass % i]$_{in\,Cu}$ are respectively the contents of element $i$ in the iron phase and in the copper phase (expressed in unit of mass percent), and Mi is the atomic weight of element i.

In light of the above, it is clear that the distribution ratio of platinum (Pt) between a copper phase and an iron phase depends on the concentration of another element $i$ in each phase and the interaction between platinum (Pt) and the other element i.

In the same manner as when considering the above-described distribution ratio of platinum (Pt), the concentration of the other element $i$ in each phase (the distribution ratio of element i between the copper phase and the iron phase) is given by Equation (3) in which Pt is replaced by element i. If any interaction is ignored, the tendency of distribution of element i can be predicted by $\gamma^{\circ}{}_{i\,in\,Fe}$ and $\gamma^{\circ}{}_{i\,in\,Cu}$ as envisaged by Equations (4) and (5).

Namely, element $i$ is concentrated in the copper phase when $\gamma^{\circ}{}_{i\,in\,Fe} \gg \gamma^{\circ}{}_{i\,in\,Cu}$, element $i$ is distributed to the same extent in each phase when $\gamma^{\circ}{}_{i\,in\,Fe} \approx \gamma^{\circ}{}_{i\,in\,Cu}$, and element $i$ is concentrated in the iron phase when $\gamma^{\circ}{}_{i\,in\,Fe} \ll \gamma^{\circ}{}_{i\,in\,Cu}$.

Table 1 shows the value of $\gamma^{\circ}{}_{i}$ in $_{Fe}/\gamma^{\circ}{}_{i\,in\,Cu}$ for each element i, which was calculated based on the enthalpy of dissolution given by the Miedema model (A.K. Niessen et al, CALPHAD, Vol. 7 (1983), pp. 51 - 70).

## Table 1

| $i$ | $\gamma^{\circ}_{i \text{ in Fe}} / \gamma^{\circ}_{i \text{ in Cu}}$ | | $i$ | $\gamma^{\circ}_{i \text{ in Fe}} / \gamma^{\circ}_{i \text{ in Cu}}$ |
|---|---|---|---|---|
| Cs | 4239681801 | | Pt | 0.88 |
| Rb | 814730216 | | Zr | 0.59 |
| K | 156564892 | | As | 0.52 |
| Ba | 34330529 | | Rh | 0.45 |
| Sr | 8589584 | | Al | 0.40 |
| Na | 613565 | | Mn | 0.40 |
| Ca | 361941 | | Hf | 0.33 |
| La | 9610 | | Ni | 0.27 |
| Nd | 6055 | | U | 0.27 |
| Pb | 2568 | | Co | 0.16 |
| Tl | 2107 | | Be | 0.13 |
| Ag | 1728 | | Ti | 0.11 |
| Li | 1728 | | Si | 0.099 |
| Dy | 1728 | | Ir | 0.076 |
| Bi | 1515 | | P | 0.051 |
| Y | 1515 | | Tc | 0.039 |
| Mg | 642 | | V | 0.037 |
| Hg | 493 | | Ru | 0.035 |
| In | 238 | | Fe | 0.030 |
| Au | 183 | | Cr | 0.023 |
| Th | 140 | | Os | 0.016 |
| Cd | 131 | | Ta | 0.0066 |
| Sb | 83 | | Nb | 0.0045 |
| Pr | 72 | | Re | 0.0045 |
| Sc | 59 | | Mo | 0.0025 |
| Sn | 59 | | W | 0.0013 |
| Cu | 27 | | | |
| Pd | 17 | | | |
| Zn | 7.2 | | | |
| Ga | 3.3 | | | |
| Pu | 2.7 | | | |
| Ge | 2.7 | | | |

From Table 1, it can be seen that Nd, Dy, and Pr have a strong tendency to concentrate in the copper phase. In addition, it can be seen that Pt has a tendency to be distributed in both phases.

Table 2 shows the interaction coefficients in copper of elements which concentrate in the copper phase in Table 1 with Pt.

## Table 2

| $i$ | $\varepsilon_{Pt\ in\ Cu}^{i}$ | $\varepsilon_{Pt\ in\ Cu}^{i} / M_i \cdot 100$ |
|---|---|---|
| Pr | −17.4 | −12.4 |
| Nd | −17.2 | −11.9 |
| Dy | −17.0 | −10.4 |
| Th | −16.8 | −7.3 |
| La | −13.0 | −9.4 |
| Y | −12.7 | −14.3 |
| Sc | −12.0 | −26.7 |
| Pu | −10.4 | −4.3 |
| Ba | −8.3 | −6.1 |
| Sr | −7.7 | −8.8 |
| Ca | −6.9 | −17.1 |
| Cs | −5.5 | −4.2 |
| Rb | −4.6 | −5.3 |
| Ga | −4.4 | −6.2 |
| K | −3.6 | −9.3 |
| Mg | −3.5 | −14.4 |
| Sn | −3.4 | −2.9 |
| In | −3.1 | −2.7 |
| Zn | −1.8 | −2.7 |
| Tl | −1.5 | −0.7 |
| Na | −1.4 | −6.0 |
| Li | −1.4 | −20.0 |
| Cd | −1.1 | −1.0 |
| Bi | −1.1 | −0.5 |
| Sb | −0.9 | −0.8 |
| Ge | −0.8 | −1.1 |
| Pb | −0.5 | −0.3 |
| Hg | 0.7 | 0.3 |
| Cu | 0.9 | 1.5 |
| Ag | 2.8 | 2.6 |
| Au | 7.7 | 3.9 |
| Pd | 8.3 | 7.8 |

| $i$ | $\varepsilon_{Pt\ in\ Fe}^{i}$ | $\varepsilon_{Pt\ in\ Fe}^{i} / M_i \cdot 100$ |
|---|---|---|
| Zr | −12.6 | −13.8 |
| Hf | −10.9 | −6.1 |
| U | −8.0 | −3.4 |
| Ti | −6.9 | −14.3 |
| Nb | −5.4 | −5.8 |
| Ta | −5.4 | −3.0 |
| V | −1.8 | −3.5 |
| Al | −0.4 | −1.5 |
| Mn | 0.6 | 1.1 |
| Mo | 0.9 | 0.9 |
| Cr | 2.0 | 3.8 |
| W | 2.1 | 1.1 |
| Be | 2.3 | 25.6 |
| Si | 3.2 | 11.3 |
| As | 3.2 | 4.3 |
| Fe | 4.2 | 7.6 |
| Co | 5.7 | 9.7 |
| Re | 6.3 | 3.4 |
| Ni | 6.6 | 11.2 |
| Tc | 7.4 | 7.5 |
| Os | 8.3 | 4.4 |
| Ru | 8.4 | 8.3 |
| Rh | 8.4 | 8.2 |
| P | 8.8 | 28.5 |
| Ir | 9.9 | 5.1 |

Table 2 shows the values of $\varepsilon_{Pt\ in\ Cu}^{i}$ or $\varepsilon_{Pt\ in\ Fe}^{i}$, the latter of which is the interaction coefficient in iron of elements which concentrate in the iron phase with Pt and was calculated based on the enthalpy of dissolution by the Miedema model.

The values of $\varepsilon_{Pt\ in\ Cu}^{i}/Mi$ and $\varepsilon_{Pt\ in\ Fe}^{i}/Mi$, which were calculated by dividing the interaction coefficients by the atomic weight $i$, are also shown in Table 2.

The more negative the value of the interaction $\varepsilon_{Pt\ in\ Cu}^{i}$, the stronger the thermodynamic affinity for Pt. It can be seen from Table 2 that among the elements which concentrate in the copper phase, neodymium (Nd), dysprosium (Dy), and praseodymium (Pr) have an extremely strong thermodynamic affinity for platinum (Pt). Based on Equations (6) and (7), it is necessary to evaluate $\varepsilon_{Pt\ in\ Cu}^{i}/Mi$ with respect to [mass % i]$_{in\ Cu}$, but even in this case, it can be seen that neodymium (Nd), dysprosium (Dy), and praseodymium (Pr) have a strong effect.

As described above, Pt which is normally distributed in both phases is concentrated in the copper phase by interaction with neodymium (Nd), dysprosium (Dy), or praseodymium (Pr) which is concentrated in the copper phase. Examples of elements which have effects similar to neodymium (Nd), dysprosium (Dy), and praseodymium (Pr) include scandium (Sc), lithium (Li), calcium (Ca), magnesium (Mg), yttrium (Y), lanthanum (La), potassium (K), strontium (Sr), thorium (Th), gallium (Ga), barium (Ba), sodium (Na), rubidium (Rb), plutonium (Pu), cesium (Cs), tin (Sn), indium (In), and zinc (Zn).

In contrast to neodymium (Nd), dysprosium (Dy), and praseodymium (Pr), elements such as titanium (Ti), zirconium (Zr), hafnium (Hf), niobium (Nb), vanadium (V), uranium (U), and tantalum (Ta) which concentrate in an iron phase and have an extremely strong thermodynamic affinity for Pt have the property of concentrating platinum (Pt) in an iron phase. Accordingly, in a system according to the present invention which recovers platinum in copper-iron scrap from a molten copper phase, these elements act as inhibiting elements.

As described above, in the present invention, using an iron (Fe)-copper (Cu)-carbon (C) system in which copper-iron scrap can be separated relatively easily into two liquid phases consisting of a molten copper phase and a molten iron phase, the distribution ratio of Pt, which by itself is preferentially distributed into a molten iron phase rather than into a molten copper phase, in the molten copper phase is increased by making the molten copper phase contain a rare metal. Once the distribution ratio of Pt into the molten copper phase is increased in this manner, since technology for recovering Pt from a molten copper phase is already established in a Cu refining process, efficient recovery of Pt contained in copper-iron scrap is realized by applying that technology.

There is no particular limitation on a means for making a molten copper phase contain a rare metal when separating a melt into two liquid phases. It is possible to use scrap containing a rare metal as the copper-iron scrap, or it is possible to add a member containing a rare metal to the melt.

A typical example of scrap for use in the former means is copper-iron scrap including neodymium magnets. An example of a source of such scrap is discarded hybrid automobiles and electric automobiles. In the future, there will be an increasingly strong demand for decreases in the amount of carbon dioxide discharged from automobiles. Therefore, it is possible that large amounts of copper-iron scrap including neodymium magnets will be produced.

An example of a member containing a rare metal for use in the latter means is processing scrap formed when processing neodymium magnets. Due to their excellent magnetic properties, it is expected that neodymium magnets will be used in the future in many products such as industrial equipment, transport equipment such as automobiles, and household electrical appliances. It is expected that such processing scrap will be produced in large amounts in the future. From this standpoint, it is promising as a stable supply source of members containing rare metals.

Rare metals are concentrated in a copper phase by carrying out a method according to the present invention. As a result, it is possible to simultaneously carry out separation and recovery of these rare metals which currently are almost completely ignored for recovery.

Using the same principles, it is possible to apply the method to separation and recovery of other valuable metals contained in industrial equipment, transport equipment such as automobiles, household electrical appliances, and the like.

Considering the effect of an interaction with Nd on the distribution of platinum group elements, palladium (Pd), rhodium (Rh), ruthenium (Ru), iridium (Ir), and osmium (Os), the results are $\varepsilon_{Pd}^{i}{}_{in\,Cu}/Mi. 100 = -11.9$, $\varepsilon_{Rh}^{i}{}_{in\,Cu}/Mi\cdot100 = -8.7$, $\varepsilon_{Ru}^{i}{}_{in\,Cu}/Mi\cdot100 = -8.0$, $\varepsilon_{Ir}^{i}{}_{in\,Cu}/Mi\cdot100 = -6.3$, and $\varepsilon_{Os}^{i}{}_{in\,Cu}/Mi\cdot100 = -3.7$, respectively. Thus, in the same manner as with platinum (Pt) for which $\varepsilon_{Pt}^{i}{}_{in\,Cu}/Mi \times 100 = -11.9$, these platinum group elements theoretically act to concentrate greater in a copper phase than in an iron phase.

Equation (8) is derived from Equations (3), (4), and (5) for a Fe-Cu-C-Pt-i system *(i* : a rare metal).

$$\log (X_{Pt\,in\,Cu}/X_{Pt\,in\,Fe\text{-}C}) = \log \gamma^{\circ}_{Pt\,in\,Fe} - \log \gamma^{\circ}_{Pt\,in\,Cu} + (\varepsilon_{Pt}^{C}{}_{in\,Fe})(X_{C\,in\,Fe\text{-}C}) +$$
$$(\varepsilon_{Pt}^{i}{}_{in\,Fe})(X_{i\,in\,Fe\text{-}C}) - (\varepsilon_{Pt}^{i}{}_{in\,Cu})(X_{i\,in\,Cu}) \qquad (8)$$

As shown by the below-described examples, the logarithm of the distribution ratio is related to the concentration of element *i (i :* a rare metal) in the copper phase. Of the terms on the right side of Equation (8), if terms other than those related to the concentration of element *i (i :* a rare metal) in the copper phase do not vary, the distribution ratio depends entirely on the concentration of element *i* in the copper phase. Therefore, a system according to the present invention is not limited by the quantitative relationship between platinum and element *i (i :* a rare metal).

However, from the standpoint of facilitating recovery of platinum in the copper phase in the subsequent step of the present invention, the concentration of Pt in the system is preferably at least 1 ppm. When it is less than 1 ppm, the concentration of platinum in the copper phase is low even if platinum is concentrated by the method according to the present invention, so even if platinum is recovered using a Cu refining process, the recovery cost per unit mass becomes too high and the method becomes inefficient.

Equation (8) can be applied to a case in which a small amount of an element is dissolved in a large amount of solvent. Considering the theoretical effect of the present invention, the concentration of platinum in the system is preferably at most 2 mass percent.

From the same point of view, the concentration of element *i (i :* a rare metal) in the system is limited. An upper limit on the concentration of element $i$ ($i$ : a rare metal) in the copper phase is set by Equation (8). Although this upper limit is not definite, from the fact that a prominent distribution promoting ability is ascertained even when Nd is 7.3% in the below-described examples, it is estimated that the upper limit is generally on the order of 10 mass percent.

In present invention, an extremely small amount of element $i$ ($i$ : a rare metal) theoretically provides an effect. However, from the standpoint of facilitating recovery of platinum in the copper phase in the subsequent step in the present invention, it is particularly preferable for the total concentration of element $i$ ($i$ : a rare metal) in the copper phase to be at least 1 mass percent so as to achieve a distribution ratio of at least 1.7.

Concerning the concentration of element i, in a preferred embodiment of a method according to the present invention, a metal (referred to below as a distribution promoting metal) having the ability to increase the distribution of platinum in a molten copper phase (referred to below as a distribution promoting ability) in the same manner as a rare metal while not being a rare metal is contained in melt to increase the distribution of Pt. As can be understood from Tables 1 and 2, examples of such elements are Sc, Li, Ca, Mg, Y, La, K, Sr, Th, Ga, Ba, Na, Rb, Pu, Cs, Sn, In, and Zn.

On the premise that the molten copper phase is a dilute solution as described above, the distribution promoting ability of these distribution promoting metals can be said to be independent of each other from the following Equation (9) which is derived from above Equation (3), (6), and (7).

$$\ln\left(X_{Pt\,in\,Cu}/X_{Pt\,in\,Fe-C}\right) = \ln\gamma^o_{Pt\,in\,Fe} - \ln\gamma^o_{Pt\,in\,Cu}$$
$$+ \sum\left\{\varepsilon^i_{Pt\,in\,Fe}/M_i/\sum([mass\%i]_{in\,Fe-C}/M_i)\cdot[mass\%i]_{in\,Fe-C}\right\}$$
$$- \sum\left\{\varepsilon^i_{Pt\,in\,Cu}/M_i/\sum([mass\%i]_{in\,Cu}/M_i)\cdot[mass\%i]_{in\,Cu}\right\} \qquad (9)$$

By calculating the following Equation (10) for these distribution promoting metals, the distribution promoting ability of these distribution promoting metals can be evaluated relative to Nd.

$$\left(\varepsilon^i_{Pt\,in\,Cu}/M_i\right)\Big/\left(\varepsilon^{Nd}_{Pt\,in\,Cu}/M_{Nd}\right) \qquad (10)$$

The results of calculation of Equation (10) are as follows.
Sc: 2.2, Li: 1.7, Ca: 1.4, Mg: 1.2, Y: 1.2, La: 0.79, K: 0.78, Sr: 0.74,
Th: 0.61, Ga: 0.52, Ba: 0.54, Na: 0.50, Rb: 0.45, Pu: 0.36, Cs: 0.35,
Sn: 0.24, In: 0.23, and Zn: 0.23.
For rare metals, Nd: 1, Pr: 1, and Dy: 0.87.

From the above, it can be seen that Sc, Li, Ca, Mg, and Y have a higher distribution promoting ability than rare metals. Accordingly, it is theoretically possible to recover platinum from a molten copper phase with a higher recovery rate by containing these elements than when using a rare metal. However, scrap containing these elements as a metal is scarce, so in actual practice, it is necessary to charge these metals into a melt of copper-iron scrap. This of course increases the recovery cost per unit mass of platinum. Accordingly, from the standpoint of stably and inexpensively obtaining a raw material for distribution promoting metals, it is preferable to use rare metals as distribution promoting metals as in the present invention.

On the other hand, by suppressing the content of metals (referred to below as distribution inhibiting metals) having the ability to inhibit the above-described distribution promoting ability (referred to below as a distribution inhibiting ability) by increasing the distribution of platinum in the molten iron phase, which is the opposite of the action of rare metals, it is possible to suppress a decrease in the distribution of Pt in the molten copper phase. As can be seen from Tables 1 and 2, examples of such distribution inhibiting metals are Ti, Zr, HF, Nb, V, U, and Ta. In the same manner as the above-described distribution promoting metals, the distribution inhibiting ability of the distribution inhibiting metals can be evaluated relative to Nd based on the following Equation (11).

$$\left(\varepsilon^i_{Pt\,in\,Fe}/M_i\right)\Big/\left(\varepsilon^{Nd}_{Pt\,in\,Cu}/M_{Nd}\right) \qquad (11)$$

The results are Ti: 1.2, Zr: 1.2, Hf: 0.51, Nb: 0.49, V: 0.29, U: 0.29, and Ta: 0.25

Based on the relative values of the ability of distribution promoting metals and distribution inhibiting metals which are quantified in this manner, the amount of elements $i$ which are contained in the molten copper phase or the molten iron phase after separation into two liquid phases preferably satisfie the following Equation (12).

$$2.2\text{Sc} + 1.7\text{Li} + 1.4\text{Ca} + 1.2\text{Mg} + 1.2\text{Y} + \text{Nd} + \text{Pr} + 0.87\,\text{Dy} + 0.79\text{La} +$$
$$0.78\text{K} + 0.74\text{Sr} + 0.61\text{Th} + 0.52\text{Ga} + 0.51\text{Ba} + 0.50\,\text{Na} + 0.45\text{Rb} + 0.36\text{Pu}$$
$$+ 0.35\text{Cs} + 0.24\text{Sn} + 0.23\text{In} + 0.23\text{Zn} - (1.2\text{Ti} + 1.2\text{Zr} + 0.51\text{Hf} + 0.49\text{Nb} +$$
$$0.29\text{V} + 0.29\text{U} + 0.25\text{Ta}) > 1 \text{ mass \%} \qquad (12)$$

where the symbol for each element indicates the mass concentration (units of mass percent) of the corresponding element in the molten copper phase with respect to the mass of the molten copper phase for distribution promoting metals and rare metals, and it indicates the mass concentration (units of mass percent) of the corresponding element in the molten iron phase with respect to the mass of the molten iron phase for distribution inhibiting metals.

A suitable temperature for the present invention is 1445 - 2920 K at which it is possible to maintain two-phase separation in a Fe-Cu-C system. However, melting at a temperature higher than 1973 K requires a large amount of energy for heating. Therefore, from the standpoint of energy costs, the melting temperature is preferably at most 1973 K. As the temperature increases, the movement of atoms becomes more active and the effect of the interaction between atoms decreases. Namely, the difference in the thermodynamic affinity between elements (the function of promoting distribution) becomes stronger as the temperature decreases. For this reason, it is preferable to carry out the method at a low temperature.

The distribution ratio given by Equation (8) does not depend on the mass ratio of the molten iron phase and the molten copper phase, so theoretically, as far as the effect of the present invention is concerned, there is no limitation on the mass ratio of the molten iron phase and the molten copper phase. However, when it is desired to achieve at least a predetermined value $a$ with respect to the ratio of the mass of platinum contained in the molten copper phase $W_{Pt\ in\ Cu}$ to the total mass of platinum contained in the copper-iron scrap $W_{Pt}$, i.e., the recovery rate, it is possible to specify the range to be satisfied by the proportion R ($= W_{Cu}/W_{Total}$) of the mass $W_{Cu}$ of the molten copper phase with respect to the total mass $W_{Total}$ of the molten copper phase and the molten iron phase by the following Equation (13) based on the lower limit $a$ of the recovery rate and the distribution ratio $k$ (the platinum concentration in the molten copper phase/the platinum concentration in the molten iron phase).

$$R \geq a/\{(1 - a)k + a\} \qquad (13)$$

For example, according to the below-described examples, when [mass Nd]$_{in\ Cu}$ is 3.59 mass % , the distribution ratio k is 2.62. Accordingly, in order to achieve a recovery rate of at least 70% with this distribution ratio, since the lower limit value $a$ is 0.7, R should be at least 0.47 or R $\geq$ 0.47 (= 0.7/1.486). In order to achieve a recovery rate of at least 90%, R $\geq$ 0.77 (= 0.9/1.162). Thus, when attempting to increase the recovery rate, it is preferable to set the mass proportion R of the molten copper phase to a high value, such as by additionally charging copper into copper-iron scrap. The copper which is additionally charged functions as a solvent, so it can of course be repeatedly used.

Above-described Equation (13) can be derived from the following relationship.

When the mass of platinum contained in the molten iron phase is expressed as $W_{Pt\ in\ Fe-C}$ and the mass of the molten iron phase is expressed as $W_{Fe-C}$, the distribution ratio $k$, the total mass of platinum contained in the molten iron scrap $W_{Pt}$, and the total mass of the molten copper phase and the molten iron phase $W_{Total}$ are given by the following Equations (14) - (16).

$$k = (W_{Pt\ in\ Cu}/W_{Cu})/(W_{Pt\ in\ Fe-C}/W_{Fe-C}) \qquad (14)$$

$$W_{Pt} = W_{Pt\ in\ Cu} + W_{Pt\ in\ Fe-C} \qquad (15)$$

$$W_{Total} = W_{Cu} + W_{Fe-C} \qquad (16)$$

The following Equation (17) is derived by canceling $W_{Pt\ in\ Fe-C}$ and $W_{Fe-C}$ from the above three equations.

$$W_{Pt\,in\,Cu} = k \cdot W_{Cu} \cdot W_{Pt} / \left\{ W_{Total} + (k-1) \cdot W_{Cu} \right\} \qquad (17)$$

The recovery rate is defmed as $W_{Pt\,in\,Cu}/W_{Pt}$ and is greater than or equal to *a*. Therefore, by substituting $W_{Pt\,in\,Cu}/W_{Pt} \geq a$ into above Equation (17), above Equation (13) is obtained.

The higher the carbon concentration in the molten iron phase, the greater is the ability to separate the molten iron phase from the molten copper phase, namely, the lower is the copper concentration incorporated in the molten iron phase. Therefore, rather than using a cupola which produces a weakly reducing atmosphere, it is preferable to use a carbonaceous material-packed bed which produces a strongly reducing atmosphere and causes a larger amount of carbon to dissolve as an apparatus for increasing the effect of the present invention.

Examples

The following examples are intended to specifically illustrate the present invention.

(Example 1)

5 grams of C-saturated Fe, 5 grams of Cu, and 0.05 grams ofPt were placed into a graphite crucible. In each experiment, under conditions in which from 0.7 to 1 gram of Au, Ag, In, Dy, or W was or was not added, the mixture was melted at 1823 K using an electric furnace in an atmosphere containing 100 ml/min of Ar (converted to standard conditions) and held for 2 hours. The sample was then removed from the furnace and cooled by blowing Ar gas.

Table 3 shows the concentration of added element *i* in the copper phase [mass % i]$_{in\,Cu}$ and the concentration of added element *i* in the iron phase [mass % i]$_{in\,Fe-C}$ in the sample after cooling, the distribution ratio of *i* in the copper phase/iron phase [mass % i]$_{in\,Cu}$/[mass % i]$_{in\,Fe-C}$, and the distribution ratio of Pt [mass % Pt]$_{in\,Cu}$/[mass % Pt]$_{in\,Fe-C}$. The results of experiments in which no element was added are also shown.

Table 3

| Element *i* | - | - | - | Au | Ag | In | Dy | w |
|---|---|---|---|---|---|---|---|---|
| [mass%i]$_{in\,Cu}$ | - | - | - | 0.91 | 1.02 | 0.98 | 0.53 | 0.001 |
| [masa%i]$_{in\,Fe-C}$ | - | - | - | 0.01 | 0.003 | 0.001 | 0.18 | 0.92 |
| [maas%i]$_{in\,Cu}$/ [mass%i]$_{in\,Fe-C}$ | - | - | - | 91 | 340 | 980 | 2.9 | 0.0011 |
| [mass%Pt]$_{in\,Cu}$/[mass%Pt]$_{in\,Fe-C}$ | 1.21 | 1.22 | 1.28 | 1.30 | 1.19 | 1.25 | 1.44 | 1.24 |
| Symbol in Fig. 1 | | ◎ | | △ | ▲ | □ | ■ | ▽ |

From the results shown in Table 3, it can be seen that Au, Ag, In, and Dy were concentrated in the Cu phase and W was concentrated in the Fe phase.

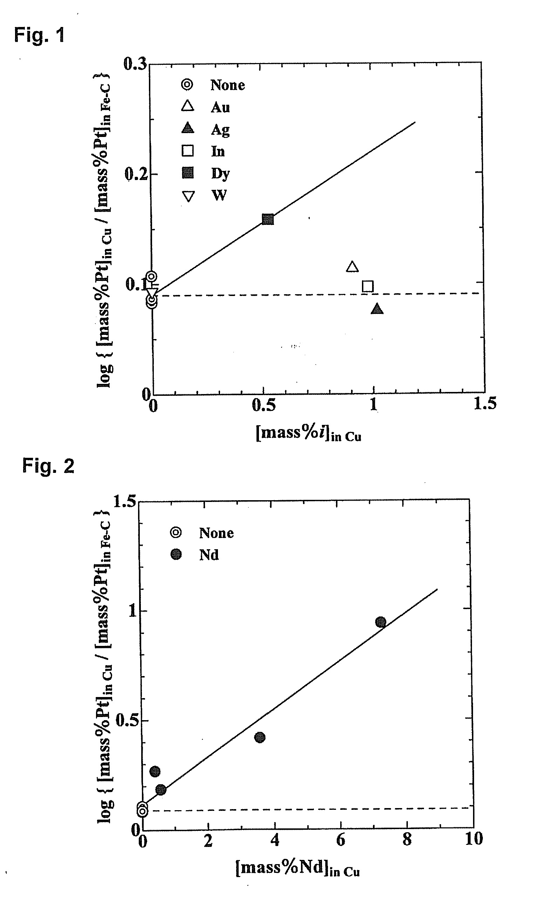

Figure 1 shows the relationship between the logarithm of the distribution ratio of Pt and the concentration of added element *i* in the copper phase. A change in the distribution ratio of Pt due to concentrated Au, Ag, and In in the copper phase was not observed, but it can be seen that the distribution ratio of Pt was increased by containing Dy. In addition, it can be seen from Figure 1 that W distributed into the iron phase did not affect the distribution of Pt.

Example 2

5 grams of carbon-saturated iron, 5 grams of a combination of a copper-neodymium alloy and copper in predetermined different proportions in order to vary the neodymium concentration in the copper, and 0.05 grams of platinum were placed into a graphite crucible. Using an electric furnace, the mixture was melted at 1823 K in an atmosphere of 100 ml/min of argon gas (converted to standard conditions) and held for 2 hours. The sample was then removed from the furnace and cooled by blowing argon gas.

Table 4 shows the neodymium concentration in the copper phase [mass % Nd]$_{in\,Cu}$ and the neodymium concentration in the iron phase [mass % Nd]$_{in\,Fe-C}$ in the sample after cooling, and the distribution ratio of neodymium [mass % Nd]$_{in\,Cu}$/[mass %Nd]$_{in\,Fe-C}$. Figure 2 shows the results of plotting this data with the neodymium concentration in the copper phase on the abscissa and the common logarithm of the distribution ratio of neodymium on the ordinate.

Table 4

| [mass%Nd]$_{in\ Cu}$ | 0.4 | 0.57 | 3.59 | 7.3 |
|---|---|---|---|---|
| [mass%Nd]$_{in\ Fe-C}$ | 0.06 | 0.09 | 0.86 | 1.38 |
| [mass%Nd]$_{in\ Cu}$ / [mass%Nd]$_{in\ Fe-C}$ | 6.7 | 6.3 | 4.2 | 5.3 |
| [mass%Pt]$_{in\ Cu}$ / [mass%Pt]$_{in\ Fe-C}$ | 1.85 | 1.53 | 2.62 | 8.70 |
| Symbol in Fig.2 | ● | | | |

From these figures and tables, it can be seen that neodymium is concentrated in the copper phase due to the presence of neodymium in the copper phase, and that the larger the amount of neodymium in the copper phase, the more concentration into the copper phase progresses.

From the above-described results, it can be seen that the method of the present invention effectively utilizes rare metals in copper-iron scrap, and that the method results in efficiently recovery of Pt by concentrating Pt into a copper phase with a high distribution ratio.

**Claims**

1. A method of recovering a platinum group element in copper-iron scrap **characterized by**
   melting copper-iron scrap containing a platinum group element to form a melt,
   forming the melt into two liquid phases which are a molten copper phase containing at least one rare metal selected from the group consisting of Nd, Pr, and Dy and a molten iron phase having a carbon concentration of at least 1 mass %, wherein the carbon contained in the molten iron phase is derived from a carbon source contained in the melt,
   separating the two liquid phases and recovering the molten copper phase, and
   separating and recovering a platinum group element dissolved in the molten copper phase from the molten copper phase.

2. A method as set forth in claim 1 wherein the molten copper phase containing the rare metal is formed by using scrap containing the rare metal as the copper-iron scrap.

3. A method as set forth in claim 1 wherein the molten copper phase containing the rare metal is formed by adding a member containing the rare metal to the melt.

4. A method as set forth in claim 1 wherein the total concentration of the rare metal contained in the molten copper phase is at least 1 mass %.

5. A method as set forth in claim 1, wherein
   the melt contains at least one distribution promoting element selected from the group consisting of Sc, Li, Ca, Mg, Y, La, K, Sr, Th, Ga, Ba, Na, and Rb, and/or at least one distribution inhibiting element selected from the group consisting of Ti, Zr, Hf, Nb, V, U, and Ta, and
   the two liquid phases which are the molten copper phase and the molten iron phase and into which the melt is separated satisfy the following Equation (i):

$$2.2Sc + 1.7Li + 1.4Ca + 1.2Mg + 1.2Y + Nd + Pr + 0.87Dy + 0.79La +$$
$$0.78K + 0.74Sr + 0.61Th + 0.52Ga + 0.51Ga + 0.50Na + 0.45Rb + 0.36Pu +$$
$$0.35Cs + 0.24Sn + 0.23In + 0.23Zn - (1.2Ti + 1.2Zr + 0.51Hf + 0.49Nb + 0.29V +$$
$$0.29U + 0.25Ta) > 1.0\ mass\ \%\qquad (i)$$

wherein, the symbol for each element in Equation (i) indicates the mass concentration (units of mass percent) of the corresponding element in the molten copper phase with respect to the mass of the molten copper phase in the case of the distribution promoting metals and the rare metals and indicates the mass concentration (units of mass percent) of the corresponding element in the molten iron phase in the case of the distribution inhibiting metals with respect to the mass of the molten iron phase.

Fig. 1

Fig. 2

**EP 2 527 477 A1**

<table>
<tr><td colspan="2" align="center">INTERNATIONAL SEARCH REPORT</td><td>International application No.<br>PCT/JP2011/050940</td></tr>
</table>

**A. CLASSIFICATION OF SUBJECT MATTER**
*C22B11/02*(2006.01)i, *C22B7/00*(2006.01)i, *C22B9/02*(2006.01)i, *C22B59/00*(2006.01)i, *C22B15/00*(2006.01)n

According to International Patent Classification (IPC) or to both national classification and IPC

**B. FIELDS SEARCHED**

Minimum documentation searched (classification system followed by classification symbols)
C22B1/00-61/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-144270 A (Nippon Steel Corp.),<br>26 May 2000 (26.05.2000),<br>& US 6368380 B1 & DE 10016075 C1 | 1-5 |
| A | JP 2007-92133 A (Nippon Mining & Metals Co., Ltd.),<br>12 April 2007 (12.04.2007),<br>& KR 10-2007-0036650 A & CN 1940099 A | 1-5 |
| A | JP 2001-279339 A (Nippon Steel Corp.),<br>10 October 2001 (10.10.2001),<br>(Family: none) | 1-5 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more such documents, such combination being obvious to a person skilled in the art<br>"&" document member of the same patent family |

| | |
|---|---|
| Date of the actual completion of the international search<br>25 February, 2011 (25.02.11) | Date of mailing of the international search report<br>08 March, 2011 (08.03.11) |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009185369 A
- JP 2004083962 A

**Non-patent literature cited in the description**

- **YAMAGUCHI et al.** *Shigen to Zairyo,* 1997, vol. 113, 1110
- **A.K. NIESSEN et al.** *CALPHAD,* 1983, vol. 7, 51-70